# EUROPEAN PATENT APPLICATION

(11) **EP 2 149 493 A1**
(43) Date of publication of application: **03.02.2010**
(21) Application number: 08425520.7
(22) Date of filing: 29.07.2008
(51) Int. Cl.: B62M 3/00

(54) **Adapter device for coupling a bearing of a bottom bracket assembly with a bottom bracket box of a bicycle**

(71) Applicant: Campagnolo S.r.l., 36100 Vicenza (VI) (IT)
(72) Inventor: Dal Pra', Giuseppe, 36010 Zanè (Vicenza) (IT)
(74) Representative: Castiglia, Paolo

(57) **Abstract**

The invention concerns an adapter device (30, 35) for coupling a bearing (20, 25) of a bottom bracket assembly with a bottom bracket box (3) of a bicycle. The adapter device (30, 35) extends along a longitudinal axis (X) and comprises a housing seat (60) of the bearing and a coupling portion (40) with the bottom bracket box (3). The aforementioned coupling portion (40) extends coaxially to the aforementioned longitudinal axis (X) and it is at least partially elastically yieldable.

## Description

The present invention concerns an adapter device for coupling a bearing of a bottom bracket assembly with a bottom bracket box suitably provided in the frame of a bicycle.

The invention also concerns a support group of a bottom bracket assembly in the bottom bracket box of the bicycle, such a support group comprising the aforementioned adapter device and at least one bearing coupled with the adapter device.

The invention also concerns a bottom bracket assembly for a bicycle comprising at least one support group of the aforementioned type, and a bicycle comprising at least one adapter device of the aforementioned type. Preferably, the aforementioned bicycle is a racing bicycle.

As known, the motion transmission system of the bicycle comprises a bottom bracket assembly in turn comprising a shaft supported in rotation through rolling bearings in a bottom bracket box suitably formed in the bicycle frame. The shaft is associated, at each of its opposite free ends, with a crank arm. The shaft can be made in a piece which is distinct from the crank arms or else it can be made in a single piece with one of the two crank arms. Alternatively, the shaft can be made in two or more pieces connected together through suitable connection means, each piece being formed integral or not with a respective crank arm.

For the sake of simplicity of explanation, in the rest of the present description and in the subsequent claims, reference shall be made, unless expressly indicated otherwise, to a shaft made in a single piece. However, it is understood that the present description also applies to the case in which the shaft is made in several pieces.

In the most common embodiments of the bottom bracket assemblies of bicycle, a pair of rolling bearings mounted on the opposite portions of free end of the shaft is used. In particular, each bearing is housed in a respective adapter device coupled with a respective end of the bottom bracket box. An adapter device is thus operatively arranged between each bearing and the bottom bracket box.

Traditionally, the adapter devices are coupled with the bottom bracket box through threading. The threading nevertheless weakens both the bottom bracket box and the adapter device. Moreover, the threading cannot be provided when the bicycle frame and the adapter devices are made from composite materials.

Patent application EP 1780111 describes a bottom bracket assembly in which the two adapter devices are coupled with interference with the bottom bracket box and the two bearings are coupled with interference with the adapter devices.

The Applicant has found that the use of the adapter devices described in EP 1780111, though on the one hand allows no threading to be made, on the other hand has various drawbacks, the main one of which is that of causing a significant weakening of the bicycle frame at the bottom bracket box, as well as a weakening of the adapter devices themselves.

The Applicant has indeed observed that the aforementioned adapter devices are usually deformed owing to the coupling with interference of the respective bearing, increasing the respective outer diameter. Such adapter devices, thus deformed, often have larger outer dimensions than those which had been designed for the coupling with interference with the bottom bracket box. Thus, it may occur that, owing to the effect of the coupling of the adapter device with the bottom bracket box, the latter is subject to a greater deformation than that which is tolerated. In this case, both the bottom bracket box and the adapter devices are subject to internal tensions that significantly lower the fatigue break limit thereof, with a consequent high risk of permanent damage to the aforementioned components.

The Applicant has also observed that a non-negligible part of the deformation of the adapter devices is also absorbed by the bearings, with consequent compression of the respective outer rings; this causes a lower sliding of the rolling elements of the bearings and after all a shorter lifetime of the bearings themselves.

Moreover, the Applicant has observed that, due to the high deformations to which the adapter devices and the bottom bracket box are subject, it is not possible - in the case of permanent damage to the adapter devices - to replace only the adapter devices, but it is necessary to also replace the bicycle frame. This means great costs, especially when frames made from carbon fibre are used.

The technical problem at the basis of the present invention is to provide an adapter device that, once coupled with the bottom bracket box and with the respective bearing, does not cause excessive deformations of the box and of the bearing and that is not itself subject to high internal tensions, so as to increase the lifetime of the aforementioned components and allow, in the case of permanent damage to the adapter device, the replacement of just the adapter device.

The present invention therefore concerns, in a first aspect thereof, an adapter device for coupling a bearing of a bottom bracket assembly with a bottom bracket box of a bicycle, the adapter device extending along a longitudinal axis and comprising a housing seat of the bearing and a coupling portion with said box extending coaxially to said longitudinal axis, **characterised in that** said coupling portion is at least partially elastically yieldable.

In the rest of the present description and in the subsequent claims, by "housing seat" of the bearing it is meant the portion of the adapter device where the bearing is housed when the bottom bracket assembly is mounted on the bicycle. Of course, in some embodiments the bearing is movable in the respective seat to recover the sizing errors of the bottom bracket box. The housing seat of the bearing in this case has a position that can vary even by 1 mm more or less with respect to a nominal position.

Advantageously, the Applicant has found that the desired stability in the coupling between adapter device and bottom bracket box can be simply obtained by making elastically yieldable at least one part of the portion of the device adapted to couple with the bottom bracket box. Indeed, in such a case, the aforementioned elastically yieldable part acts as a centring element of the adapter device in the bottom bracket box and is opposed by friction to the slipping of the adapter device from the bottom bracket box. Such a provision allows the axial extension of said first axial portion to be further limited. It is thus possible to make a precise and stable coupling of the adapter device in the bottom bracket box, in this way limiting the axial extension of the coupling portion of the adapter device with the bottom bracket box. This is particularly advantageous in the case in which the aforementioned coupling is a coupling with interference, which as known generates deformations of the box and of the adapter device; in this case, the limited axial extension of the coupling portion involves a considerable reduction of the aforementioned deformations, with a consequent solution of the problems discussed above with reference to the prior art.

In a first embodiment of the adapter device of the present invention, the aforementioned coupling portion is adapted to be inserted into the bottom bracket box; in this case, the coupling portion is at least elastically yieldable towards the inside of the adapter device.

In a second embodiment of the adapter device of the present invention, the aforementioned coupling portion is, on the other hand, adapted to be fitted onto the bottom bracket box; in this case, the coupling portion is elastically yieldable towards the outside of the adapter device.

In preferred embodiments of the adapter device of the present invention, it comprises an elastically yieldable element fitted onto, or inserted into, a portion of said adapter device, said portion being adapted to be inserted into, or fitted onto, said bottom bracket box. Preferably, such an element is a conventional O-ring.

The use of an O-ring is particularly advantageous in view of the easiness of finding and using thereof. In this way a particularly simple and cost-effective embodiment of the adapter device of the present invention is obtained. For example, it is possible to use an O-ring typically used in the hubs of the bicycle wheels.

Preferably, the O-ring is housed in a throat formed on the coupling portion of the adapter device. Advantageously, the throat holds the O-ring in position during the insertion/fitting of the adapter device into/onto the bottom bracket box.

An embodiment is provided in which the device of the present invention comprises a plurality of O-rings, preferably axially spaced apart one another.

As an alternative to the O-ring, it is possible to use an elastic element which is integral with the aforementioned portion of the adapter device adapted to be inserted into, or fitted onto, the bottom bracket box, for example through gluing or, in the case in which the adapter device is made from composite materials, through co-moulding.

In an alternative embodiment of the adapter device of the present invention, the at least partially elastically yieldable coupling portion comprises a hollow cylindrical portion provided with a plurality of notches. Advantageously, the notches give the desired elastic yieldingness.

Preferably, the aforementioned notches extend parallel to the longitudinal axis of the adapter device.

More preferably, the aforementioned hollow cylindrical end portion comprises, at a free end edge thereof, an annular flange adapted to be snap-housed in a corresponding throat formed in the bottom bracket box. This contributes to the centring and to the immobilisation of the adapter device in the bottom bracket box, preventing it from accidentally slipping out.

In the preferred embodiments thereof, the adapter device of the present invention comprises at least one surface of axial abutment having different radial dimensions with respect to those of said coupling portion. In particular, such radial dimensions are increased with respect to those of said coupling portion in the case in which the adapter device is adapted to be inserted into the bottom bracket box, and reduced with respect to those of said coupling portion in the case in which the adapter device is adapted to be fitted onto said box.

Advantageously, the aforementioned surface of axial abutment prevents the adapter device from being able to tilt with respect to the direction of insertion/fitting into/onto the bottom bracket box during the coupling together of the aforementioned components or once the coupling is completed, for example due to an asymmetrical deflection of the elastically yieldable element. Such a precaution thus allows the axial extension of the coupling portion to be further limited.

Preferably, the aforementioned surface of axial abutment has a substantially circumferential extension. In this way, the axial abutment between adapter device and bottom bracket box takes place at an annular surface, in this way making the action of contrast to a possible undesired tendency of the adapter device to assume a tilted position with respect to the direction of insertion/fitting into/onto the bottom bracket box particularly effective.

The surface of axial abutment can be made at an end flange of the adapter device adapted to go into abutment with a corresponding abutment surface defined on a front free end surface of the bottom bracket box. In addition or as an alternative to the flange, the adapter device can comprise a surface of axial abutment defined in the coupling portion and adapted to go into abutment with a corresponding abutment surface defined inside the bottom bracket box..

Irrespective of the specific embodiment of the adapter device of the present invention, the aforementioned coupling portion comprises a first axial portion, adapted to be coupled with interference with said bottom bracket box and distinct from a second elastically yieldable axial portion.

In the rest of the present description and in the subsequent claims, by "axial portion" of the coupling portion it is meant a part or area of said coupling portion extending longitudinally according to the longitudinal axis of the adapter device.

Advantageously, the first axial portion centres and holds the adapter device at the bottom bracket box. Thanks to the presence of the elastically yieldable portion, the axial extension of the first axial portion can be much more limited than that provided in the adapter devices of the prior art. In this way, the deformation of the box and of the adapter device owing to the effect of the mutual coupling is considerably reduced, with consequent advantages in solving the problems discussed above with reference to the prior art.

Preferably, the radial dimension of the first axial portion is different from that of the second radial portion. In particular, the difference between the radial dimension of said second axial portion and the radial dimension of said first axial portion is, in absolute value, not less than 0.001 mm. Such a difference can therefore be very small, but in any case it is sufficient to allow to make a coupling with interference at an area of the coupling portion of the adapter device and a coupling without interference at the other areas of the aforementioned coupling portion.

Preferably, said first axial portion has an outer diameter equal to 41.960 mm with tolerance of between +0.05 mm and +0.1 mm. Such an adapter device is particularly suitable for being used in a bicycle in which the bottom bracket box has at least one free end portion whose inner diameter is equal to 41.960 mm with tolerance of between 0 mm and +0.025 mm.

Alternatively, said first axial portion has an outer diameter equal to 41 mm with tolerance of between 0 mm and +0.05 mm. Such an adapter device is particularly suitable for being used in a bicycle in which the bottom bracket box has at least one free end portion whose inner diameter is equal to 41 mm with tolerance of between -0.08 mm and 0 mm or else between -0.08 mm and -0.03 mm.

It is noted that the dimensions of the bottom bracket boxes of the bicycles are set by agreements between frame manufacturers and bottom bracket assembly manufacturers. Amongst the most recent agreements on the dimensions of the bottom bracket boxes the following nominal dimensions seem destined to prevail (diameter X length, in mm): 41 X 86.5 and 41.960 X 68, the latter being developed by Cannondale and being known as standard BB30. Advantageously, the adapter device of the present invention is perfectly usable with bottom bracket boxes having the aforementioned dimensions.

Preferably, the coupling portion of the adapter device with the bottom bracket box has a predetermined axial length and the axial length of said first axial portion is shorter than or equal to one third of the axial length of said adapter device. More preferably, the axial length of said first axial portion is shorter than or equal to half the axial length of the aforementioned coupling portion. Even more preferably, the axial length of said first axial portion is shorter than or equal to one third of the axial length of the aforementioned coupling portion.

Preferably, said first axial portion follows said second axial portion with reference to the coupling direction of the adapter device with said bottom bracket box. In this case, advantageously, said second axial portion acts as a guide during the insertion/fitting with interference of the adapter device into/onto the bottom bracket box.

The Applicant has indeed found that the bottom bracket boxes of the bicycles adapted for a coupling with interference with the adapter devices are sufficiently refined to correctly guide the adapter devices during the mutual coupling. It is therefore possible, thanks to the provision of a suitable guide portion in the adapter device, to obtain a precise coupling with interference without the need for special guide tools for the correct mutual positioning of the two components.

Moreover, the Applicant has found that the stresses imparted by the bottom bracket box to the adapter device during the mutual coupling of the aforementioned components are reduced owing to the fact that the area of coupling with interference of the coupling portion of the adapter device is located near or at the free end portion of the bottom bracket box, such a free end portion being by its very nature more deformable than the other portions of the bottom bracket box. The residual internal tensions in the bottom bracket box and in the adapter device following the mutual coupling are thus reduced.

However, an embodiment of the adapter device of the present invention is provided in which said first axial portion precedes said second axial portion with reference to the coupling direction of the adapter device in the bottom bracket box.

Preferably, said first axial portion occupies, in the axial direction, a position at least partially distinct from the position occupied by the housing seat of the bearing. This precaution is particularly advantageous in the case in which the bearing is coupled with interference with the adapter device. In this case, indeed, the residual tensions due to the two couplings with interference are active in axial positions that are at least partially different, and therefore only partially add one another or do not add one another at all. The aforementioned precaution is in any case advantageous also in the case in which the bearing is coupled with the adapter device through a transition coupling or a coupling with clearance, and it is coupled with the shaft of the bottom bracket assembly through a coupling with interference. In this case, indeed, the bearing must be coupled with the adapter device only after the latter has been coupled with interference with the bottom bracket box; however, given that the housing seat of the bearing is in an axial position at least partially different from that of the coupling portion with the bottom bracket box, the housing seat of the bearing is not subject to deformations such as to prevent the correct coupling with the bearing. Therefore such a coupling is also particularly easy and precise.

However, an embodiment of the adapter device of the present invention is provided in which said first axial portion occupies, in axial direction, a position totally or at least partially coinciding with the position occupied by the housing seat of the bearing.

In a second aspect thereof, the present invention concerns a support group of a bottom bracket assembly in a bottom bracket box of a bicycle, the aforementioned support group comprising an adapter device of the type described above and at least one bearing coupled with said adapter device.

Preferably, such a support group individually or in combination has all of the structural and functional features discussed above with reference to the adapter device of the present invention and therefore has all of the aforementioned advantages.

The bearing can be coupled with the adapter device through a transition coupling or a coupling with clearance, or alternatively through a coupling with interference. Preferably, the bearing is coupled with the adapter device through a transition coupling or a coupling with clearance when the bearing is adapted to be coupled with interference with the shaft of the bottom bracket assembly. On the other hand, the bearing is preferably coupled with interference with the adapter device when the bearing is adapted to be coupled with the shaft of the bottom bracket assembly through a transition coupling or a coupling with clearance.

In the present description and in the subsequent claims, by "transition coupling" it is meant a coupling such that the coupling and/or de-coupling can occur without the help of a tool, but still requires the application of a certain force. By "coupling with clearance", on the other hand, it is meant a coupling such that the coupling and/or de-coupling does not require the application of any force.

In a third aspect thereof the present invention concerns a bottom bracket assembly for a bicycle, such an assembly comprising at least one support group of the type described above.

Preferably, such an assembly individually or in combination has all of the structural and functional features discussed above with reference to the adapter device and to the support group of the present invention and therefore it has all of the aforementioned advantages.

Preferably, the assembly of the present invention comprises two support groups of the type described above.

In a first embodiment of the bottom bracket assembly of the present invention, the assembly comprises a shaft supported in rotation by at least one bearing, said at least one bearing being coupled with interference with the shaft and being coupled through a transition coupling or through a coupling with clearance with the respective adapter device.

In a second embodiment of the bottom bracket assembly of the present invention, the assembly comprises a shaft supported in rotation by said at least one bearing, said at least one bearing being coupled with interference with the respective adapter device and being coupled through a transition coupling or through a coupling with clearance with the shaft.

In a fourth aspect thereof the present invention concerns a bicycle comprising a bottom bracket box and at least one adapter device of the type described above which is coupled with interference with the bottom bracket box. Preferably, such a bicycle comprises a support group of the type described above. More preferably, the aforementioned bicycle comprises a bottom bracket assembly of the type described above.

The bicycle of the present invention individually or in combination thus has all of the structural and functional features discussed above with reference to the adapter device, to the support group and to the bottom bracket assembly of the present invention and therefore it has all of the aforementioned advantages.

Preferably, the bottom bracket box has at least one free end portion whose inner diameter is equal to 41.960 mm with tolerance of between 0 mm and +0.025 mm. In this case the bicycle preferably comprises an adapter device in which said first axial portion has an outer diameter equal to 41.960 mm with tolerance of between +0.05 mm and +0.1 mm.

Alternatively, the bottom bracket box has at least one free end portion whose inner diameter is equal to 41 mm with tolerance of between -0.08 mm and 0 mm or else between - 0.08 mm and -0.03 mm. In such cases the bicycle preferably comprises an adapter device in which said first axial portion has an outer diameter equal to 41 mm with tolerance of between 0 mm and +0.05 mm.

A diameter of the bottom bracket box substantially equal to 42 mm is particularly advantageous because it makes it possible for no adapter device to be used, with it indeed being possible to use a bearing of standard dimensions directly coupled with interference with the bottom bracket box.

However, alternative embodiments of the bicycle of the present invention are provided in which the bottom bracket box has at least one free end portion whose inner diameter is sized with coupling tolerance belonging to classes H6 or H7 of the standard ISO/R 286 and in which the first axial portion of the adapter device coupled with such a box has an outer diameter sized with coupling tolerance belonging respectively to classes n5, n6, p6, r6, s6, t6, u6 or x6 of the standard ISO/R 286.

Further features and advantages of the present invention shall become clearer from the following detailed description of some preferred embodiments thereof, made with reference to the attached drawings and given for indicating and not limiting purposes. In such drawings:
- figure 1 schematically represents a perspective view of a bicycle comprising a bottom bracket assembly provided with adapter devices according to the present invention;
- figure 2 schematically represents a longitudinal view, partially sectioned, of the bottom bracket assembly for the bicycle of figure 1, in which the adapter devices housed in the bottom bracket box can be seen;
- figure 3 schematically represents an enlarged longitudinal section of the two adapter devices of figure 2, housed in the bottom bracket box of figure 2;
- figure 4 schematically represents an enlarged longitudinal section of a detail of one of the two adapter devices of figure 3;
- figures 5 to 12 and figure 14 schematically represent longitudinal sections, analogous to that of figure 3, of further embodiments of adapter devices according to the present invention, housed in a bottom bracket box analogous to that of figure 2;
- figure 13 schematically represents a longitudinal view of a further embodiment of an adapter device according to the present invention;
- figure 15 schematically represents an exploded longitudinal view of a tool for coupling one or two adapter devices of the present invention with a bottom bracket box of a bicycle;
- figure 16 schematically represents a longitudinal section of the tool of figure 15, of the two adapter devices of figure 2 and of the bottom bracket box of figure 2 in an initial coupling step of the two adapter devices with the bottom bracket box;
- figure 17 schematically represents an enlarged longitudinal section of a detail of figure 16;
- figure 18 schematically represents a longitudinal section of the tool of figure 15, of one adapter device of figure 2 and of the bottom bracket box of figure 2 in an initial coupling step of the adapter device with the bottom bracket box.

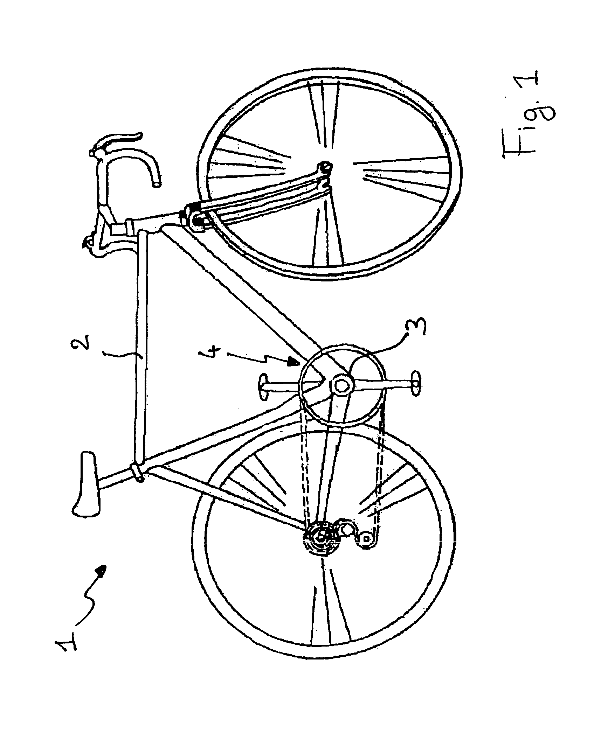

With initial reference to figure 1, a bicycle 1 is shown comprising a frame 2 where a box 3 for housing a bottom bracket assembly 4, hereafter for the sake of simplicity called "bottom bracket box", is formed.

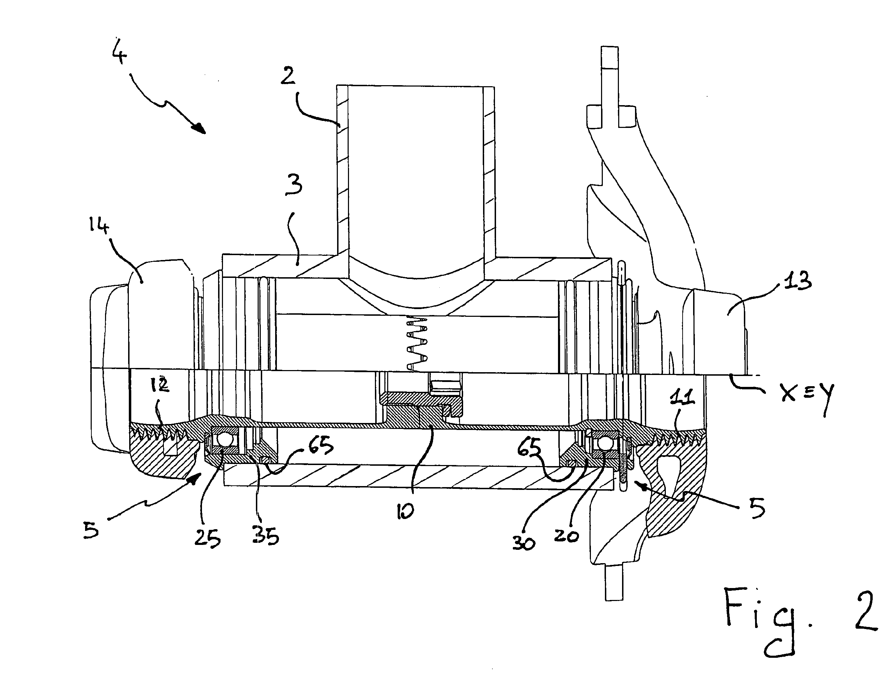

The bottom bracket assembly 4 is better illustrated in figure 2, which represents a view in which the bottom bracket box 3 has been sectioned, just as the lower half of the assembly 4 is in section.

The bottom bracket assembly 4 comprises a shaft 10 coupled at opposite free end portions 11 and 12 thereof respectively with a right crank arm 13 and with a left crank arm 14. The shaft 10 is supported in rotation in the bottom bracket box 3 through a pair of right and left bearings 20 and 25, located near the respective free end portions 11 and 12 of the shaft 10.

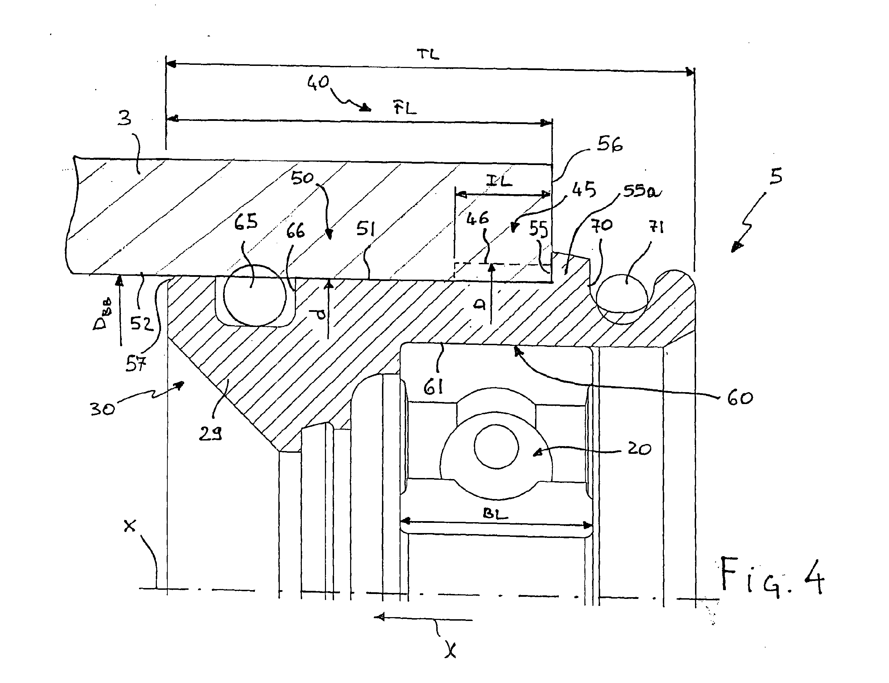

The bearings 20 and 25 are in turn supported in the bottom bracket box 3 through respective adapter devices 30 and 35. In the rest of the present description and in the subsequent claims, the group comprising an adapter device 30, 35 coupled with the respective bearing 20, 25 is indicated as support group 5 of the shaft 10. An enlarged detail of the support group 5 is illustrated in figure 4.

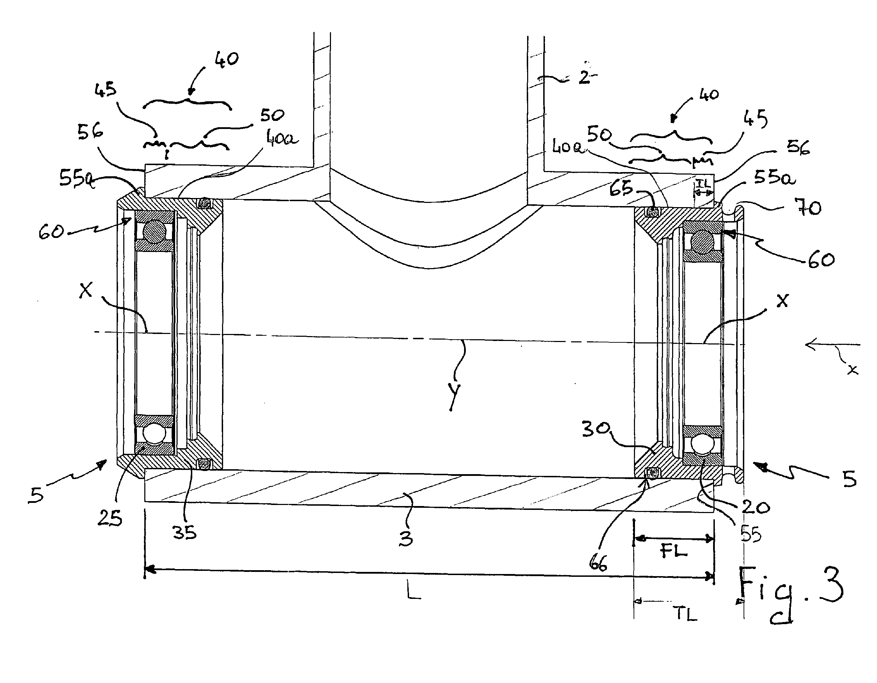

Figure 3 illustrates in greater detail the coupling of the adapter devices 30 and 35 with the bottom bracket box 3 and with the respective bearings 20 and 25.

Hereafter for the sake of simplicity it shall be referred to just the adapter device 30; however, what is stated should be considered valid also for the adapter device 35, unless specified otherwise.

The adapter device 30 extends, preferably symmetrically, about a longitudinal axis X, which defines its coupling direction with the box 3, in particular the direction of insertion of the adapter device 30 in the box 3. The axis X, in a condition with the assembly 4 mounted in the box 3, coincides with the rotation axis of the bearings 20 and 25, and with a longitudinal axis of symmetry Y of the bottom bracket box 3.

In the coupled condition of figure 3, the adapter device 30 comprises a coupling portion 40 inserted inside the bottom bracket box 3. The coupling portion 40 in turn comprises a first axial portion 45, coupled with interference with the inner surface of the box 3, and a second axial portion 50 coupled without interference with the inner surface of the box 3. The first axial portion 45 follows the second axial portion 50 with reference to the coupling direction of the adapter device 30 with the bottom bracket box 3, such a coupling direction being indicated with the arrow x in figure 3 and 4.

The radial coupling between the coupling portion 40 of the adapter device 30 and the bottom bracket box 3 takes place at a cylindrical surface 40a of the adapter device 30 extending coaxially to the longitudinal axis X.

With reference to such figures, the adapter device 30 comprises, at a free end portion of the first axial portion 45, and therefore on the opposite side to the second axial portion 50, an annular surface 55 of axial abutment. The surface 55 of axial abutment has greater radial dimensions than the coupling portion 40; in particular, the abutment surface 55 is defined on a flange 55a extending perpendicular to the longitudinal axis X of the adapter device. The abutment surface 55 stops in abutment against a front surface 56 at the free end of the bottom bracket box 3, such a surface 56 preferably being annular too and defined on a plane perpendicular to the axis Y.

Preferably, the first axial portion 45, the second axial portion 50 and the abutment surface 55 are defined on a main body 29 (figure 4), made in a single piece. However, the possibility that portions 45, 50 and portion 55 be defined on distinct pieces assembled one another is not excluded.

The bearing 20 is housed in a housing seat 60 that occupies, in the axial direction, a position partially coinciding with the axial position occupied by the first axial portion 45. In particular, in the case of figure 4, the axial position of the first axial portion 45 is overlapped to the axial position of the seat 60.

Preferably, the bearing 20 is inserted into the seat 60 with a movable coupling, like for example a coupling with clearance or a transition coupling, and it is coupled with the shaft 10 with interference. However, a coupling with interference of the bearing 20 with the housing seat 60, and a movable coupling with the shaft 10 is not excluded.

Preferably, the coupling portion 40 inserted into the bottom bracket box 3 has an axial length FL shorter than or equal to one fifth of the axial length L of the bottom bracket box 3. More preferably, the axial length FL is shorter than or equal to one sixth of the axial length L and even more preferably the length FL is shorter than or equal to one seventh of the length L.

Figure 4 allows to view in even greater detail the dimensional relationships of the adapter device 30. In particular, it can be seen that the first axial portion 45 has a dimension in the axial direction, which is indicated as axial length IL, that is shorter than or at most equal to one third of the axial length TL of the adapter device 30. Even more preferably, the axial length IL is shorter than or at most equal to half the axial length FL, preferably shorter than the axial length of the second axial portion 50. The preferred embodiments are, however, those in which the axial length IL is shorter than or equal to one third of the axial length FL. The bearing 20, when it is housed in its seat 60, is located, in the axial direction, at the first axial portion 45.

Preferably, the axial length IL is shorter than or equal to the axial length BL of the bearing 20, measured in the direction of the axis X. Even more preferably, the axial length IL is shorter than or equal to half the axial length BL of the bearing 20.

The first axial portion 45 comprises an outer cylindrical surface 46, shown with a broken line in figure 4 and represented with an exaggerated radial dimension solely for illustrative purpose. Preferably, the cylindrical surface 46 has a D of between 41 mm and 42 mm, where the diameter D of 42 mm is particularly advantageous because it makes it possible to use, instead of the support group 5, a bearing of standard dimensions, which is thus directly coupled with interference with the bottom bracket box 3.

Preferably, the diameter D is selected in one of the following two ranges, the extremes thereof being included: nominal value equal to 41.960 mm with tolerance of between +0.05 mm and +0.1 mm and nominal value 41 mm with tolerance of between 0 mm and +0.05 mm.

In the first case (nominal value of the diameter D equal to 41.960 mm with tolerance of between +0.05 mm and +0.1 mm), the bottom bracket box 3 has a free end portion whose inner diameter is equal to 41.960 mm with tolerance of between 0 mm and +0.025 mm.

In the second case (nominal value of the diameter D equal to 41 mm with tolerance of between 0 mm and +0.05 mm) the bottom bracket box 3 has a free end portion whose inner diameter is equal to 41 mm with tolerance of between -0.08 mm and 0 mm or else between -0.08 mm and -0.03 mm.

However embodiments of the adapter device 30 of the present invention are provided in which the diameter D of the first axial portion is selected with a coupling tolerance belonging to classes n5, n6, p6, r6, s6, t6, u6 or x6 of the standard ISO/R 286. In this case, the bottom bracket box 3 has a free end portion whose inner diameter is sized with coupling tolerance belonging respectively to classes H6 or H7 of the standard ISO/R 286.

The second axial portion 50 comprises an outer cylindrical surface 51, which has a smaller diameter d than the diameter D of the cylindrical surface 46. The difference D-d can also be of the order of magnitude of a hundredth of a millimetre. Preferably, D-d ≥ 0.001 mm (in figure 4 the difference is deliberately exaggerated for illustrative purpose). In any case, the diameter d of the cylindrical surface 51 must be such as not to generate a coupling with interference with the bottom bracket box 3, but such as to generate a transition coupling or coupling with clearance. This allows the second axial portion 50 to be inserted without damaging the bottom bracket box 3 at the area in which it is coupled with the first axial portion 45.

As shown in figure 4, the inner cylindrical surface 52 of the bottom bracket box 3 has, at least at the first axial portion 45 of the adapter device 30, a smaller diameter DBB than the diameter D; the diameter DBB is preferably selected in one of the following three ranges, the extremes thereof being included: nominal value equal to 41.960 mm with tolerance of between 0 mm and +0.025 mm, nominal value equal to 41 mm with tolerance of between -0.08 mm and 0 mm and nominal value equal to 41 mm with tolerance of between -0.08 mm and -0.03 mm.

The cylindrical surface 51 acts as a guide surface of the adapter device 30 during its insertion into the bottom bracket box 3, avoiding the adapter device 30 and the bottom bracket box 3 from being able to become misaligned.

However, an alternative embodiment of the adapter device 30 is provided in which the second axial portion 50 follows the first axial surface 45 with reference to the direction x of coupling of the adapter device 30 in the bottom bracket box 3.

In addition or as an alternative to the cylindrical surface 51 it is advantageous to obtain the guide effect by providing an elastically yieldable portion in the adapter device 30. In particular, it is provided for the coupling surface of the adapter device 30 with the bottom bracket box 3 to comprise at least one elastically yieldable surface portion. In the example of the adapter device 30 of figure 3, the elastically yieldable portion is defined by an O-ring 65 fitted onto the coupling portion 40 of the adapter device 30. In particular, the O-ring is housed in an annular throat 66 made in the second axial portion 50 of the adapter device 30, so that its radially outer surface projects radially outwards with respect to the outer cylindrical surface of the second axial portion 50.

According to a variant embodiment that has not been illustrated, the use of two or more O-rings axially spaced apart one another is foreseen.

As shown in figures 3 and 4, the adapter device 30 comprises, at a free end portion thereof intended to remain outside the bottom bracket box 3 when the adapter device 30 is coupled with such a box, a throat 70 in which a split pin 71 is housed that retains the bearing 20 in the seat 60, as described in patent application No. EP 1829779 to the same Applicant.

Figure 4 also shows how the adapter device 30 comprises, at the free end edge of the second axial portion 50,a front bevel 57; such a bevel 57 precedes, in the coupling direction x, the remaining part of the second axial portion 50, making it easier to insert the bottom bracket box 3.

The adapter device 35 differs from the adapter device 30 essentially only in that it does not comprise the throat 70 and the split pin 71.

The housing seat 60 of the bearing 20 is defined by an outer cylindrical surface 61 having dimensions such as to make a transition coupling with a bearing of standard dimensions, so that the bearing can be inserted manually and is in any case stable. However, a dimensional tolerance such as to make a coupling with clearance or with interference is not excluded.

In figure 3 it can be seen how the housing seat 60 for the bearing 20, though it is at the first axial portion 45, is such as to support the bearing 20 partially outside the bottom bracket box 3.

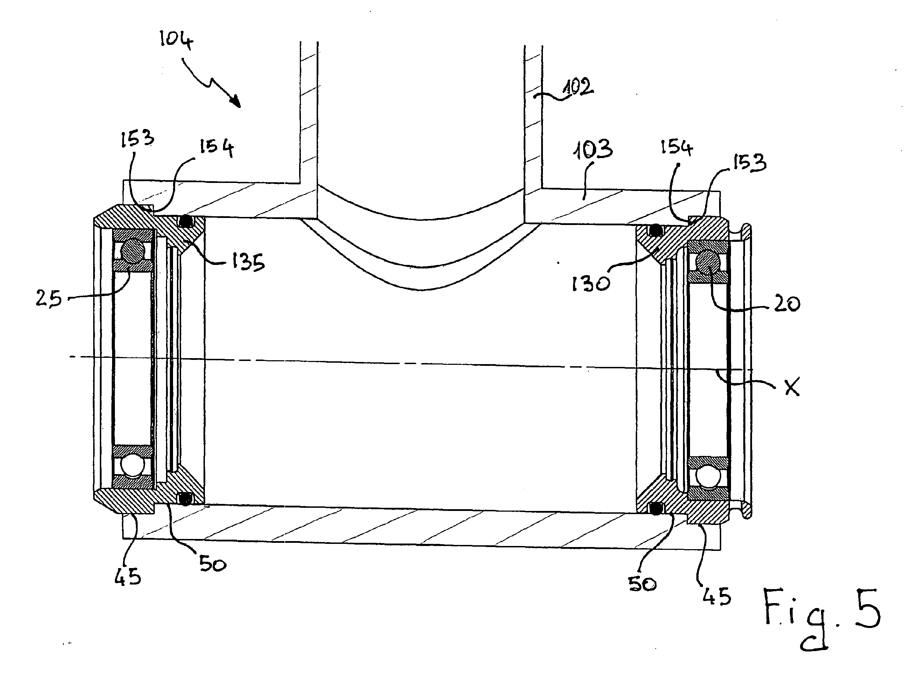

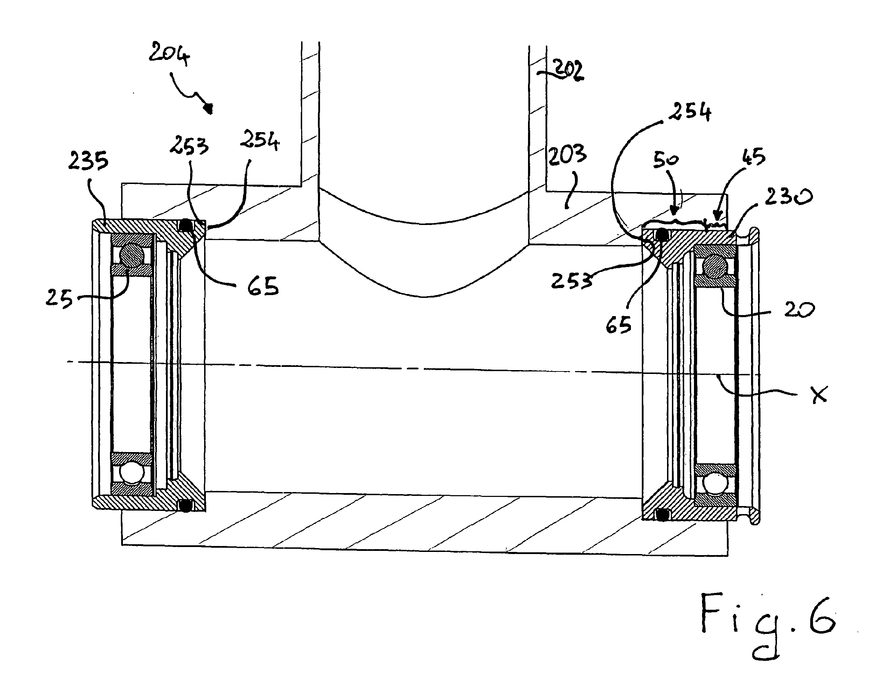

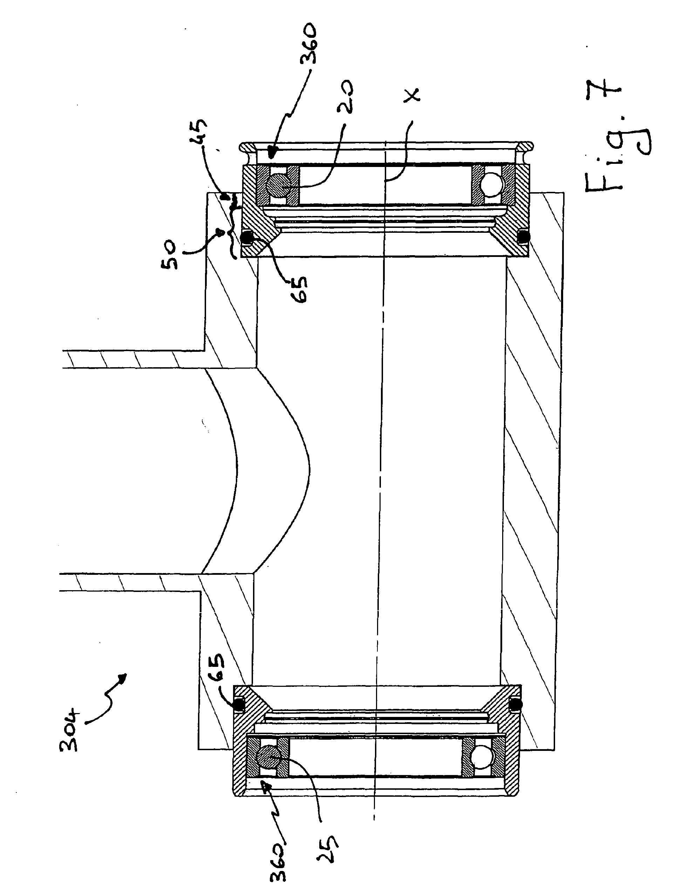

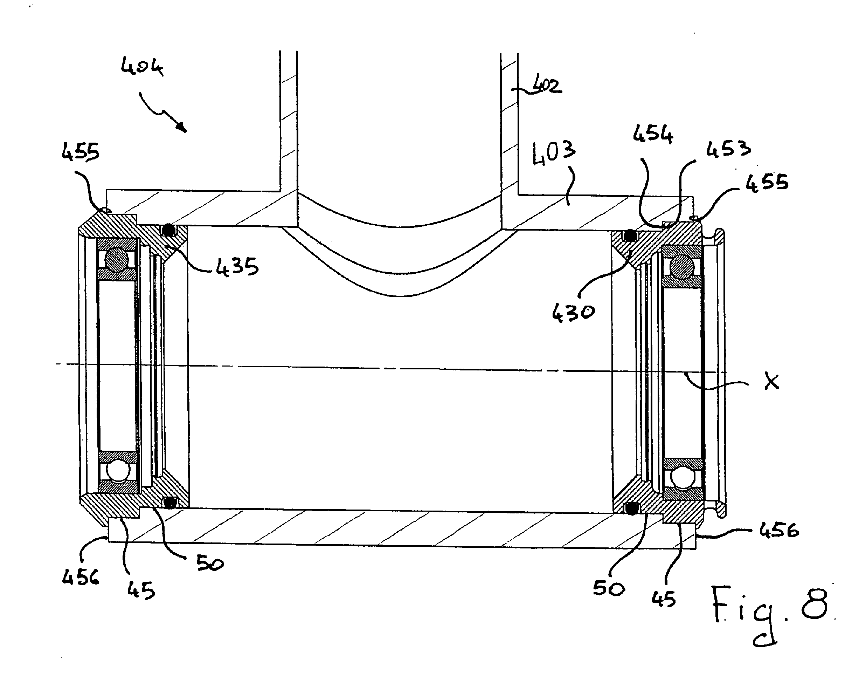

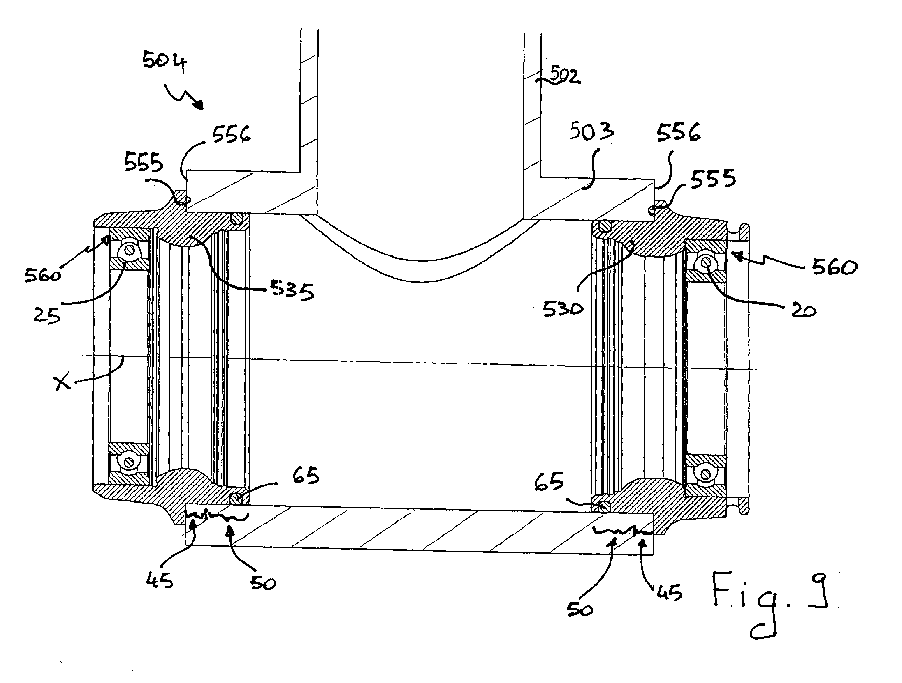

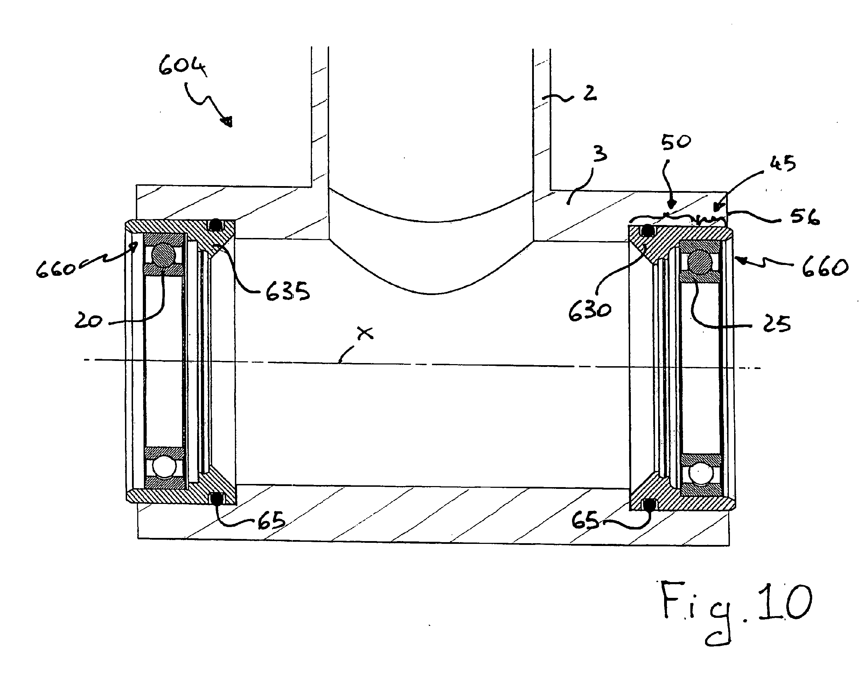

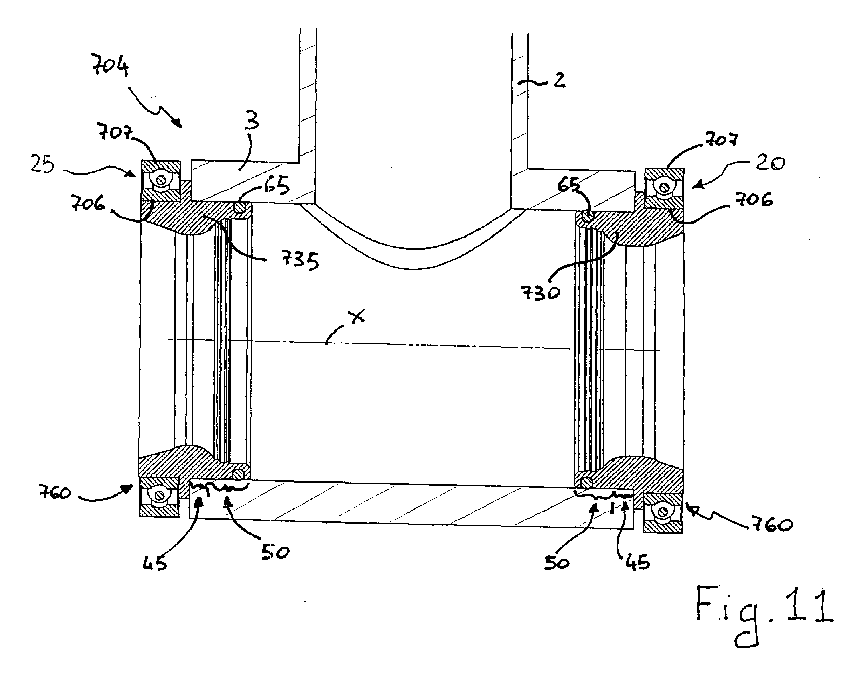

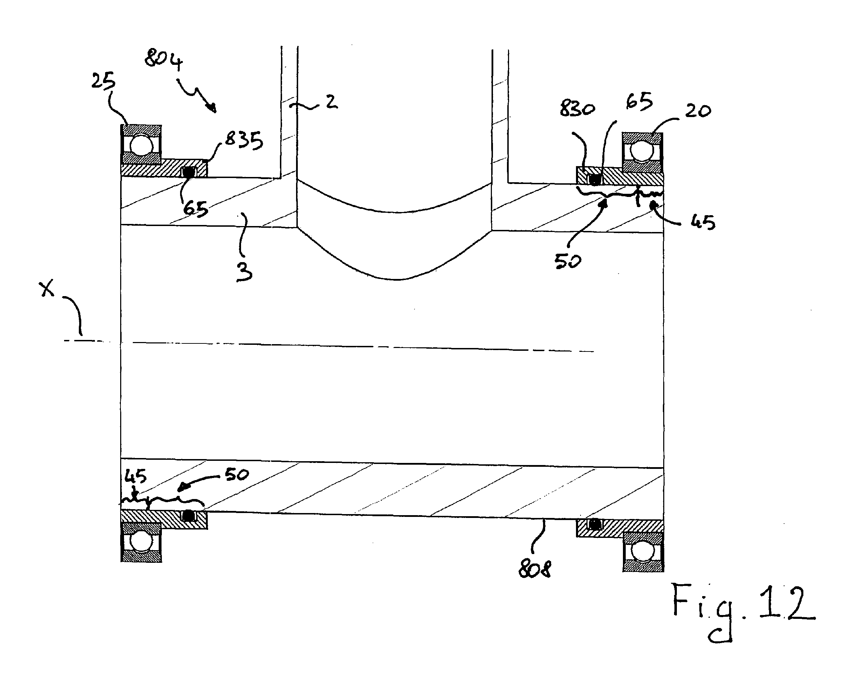

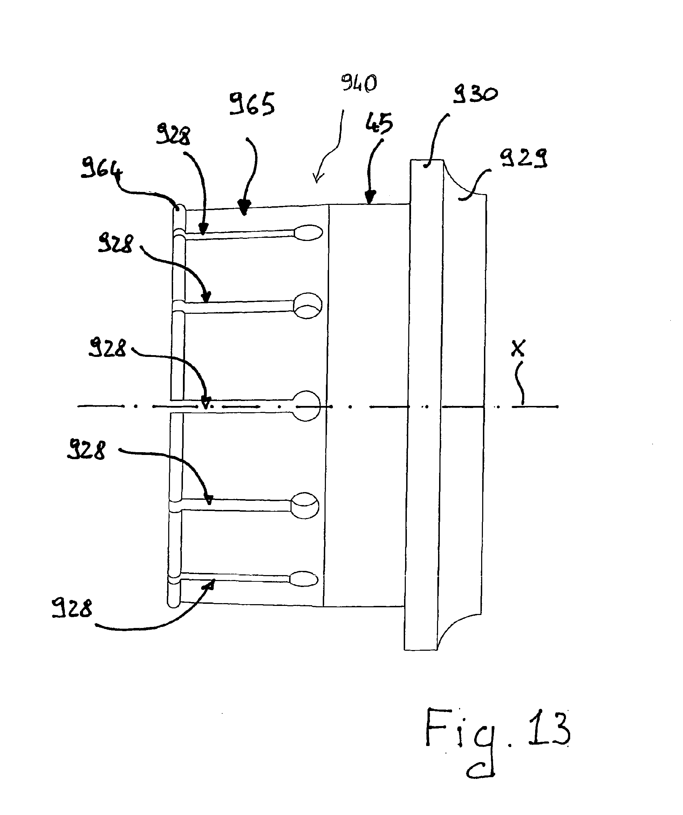

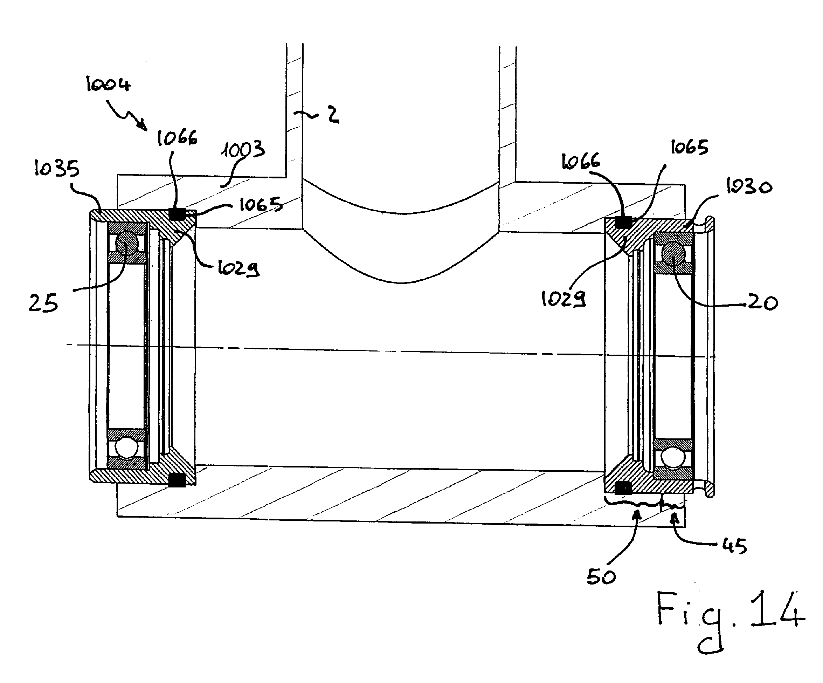

Hereafter, some further embodiments of bottom bracket assemblies according to the present invention shall be described, in which elements identical to those of the bottom bracket assembly 4 described above with reference to figures 1-4 shall be indicated with the same reference numerals and shall not be described any further, whereas elements corresponding to those of the bottom bracket assembly 4 shall be indicated with the same reference numeral increased by 100 in figure 5, 200 in figure 6, 300 in figure 7, 400 in figure 8, 500 in figure 9, 600 in figure 10, 700 in figure 11, 800 in figure 12, 900 in figure 13 and 1000 in figure 14.

Figure 5 shows the essential components of an alternative embodiment of the bottom bracket assembly of the invention, which is indicated with 104 and which differs from that of figure 3 only in that the adapter devices 130 and 135 comprise a surface 154 of axial abutment, preferably annular and perpendicular to the axis X, adapted to go into abutment against a corresponding surface 153 of axial abutment , preferably annular and perpendicular to the axis Y, made inside the bottom bracket box 103. In this case, preferably, the abutment surface 154 is arranged between the first axial portion 45 and the second axial portion 50.

Figure 6 shows the essential components of an alternative embodiment of the bottom bracket assembly of the invention, which is indicated with 204 and which differs from that of figure 3 only in that the surface 55 of axial abutment of figure 3 has been eliminated. It function is carried out by a front surface 254 of the free end of the adapter devices 230 and 235. Also in this case, the surface 254 is preferably perpendicular to the axis X and, like in the case illustrated in figure 5, it goes into abutment against a corresponding annular surface 253 of axial abutment formed inside the bottom bracket box 203.

Figure 7 shows the essential components of an alternative embodiment of the bottom bracket assembly of the invention, which is indicated with 304 and which differs from that of figure 6 only in that the housing seat 360 for the bearing 20 formed in each of the adapter devices 330 and 335 is located in a position such as to support the relative bearing 20 and 25 in an axially more outer position with respect to the bottom bracket box 203 of figure 6, but still sufficiently inner to at least partially overlap with the axial position of the first axial portion 45. In other words, the axial position of the housing seat 360 is only partially distinct from the axial position of the first axial portion 45.

Figure 8 shows the essential components of an alternative embodiment of the bottom bracket assembly of the invention, which is indicated with 404 and which differs from that of figure 5 only in that the adapter devices 430 and 435 comprise, in addition to an abutment surface 454 (analogous to the abutment surface 154 of figure 5) in abutment against a corresponding surface 453 of axial abutment (analogous to the surface 153 of figure 5) formed inside the bottom bracket box 403, also an abutment surface 455 (analogous to the abutment surface 55 of figure 1) adapted to stop in abutment against the front free end surface 456 of the bottom bracket box 403.

Figure 9 shows the essential components of an alternative embodiment of the bottom bracket assembly of the invention, which is indicated with 504 and which differs from that of figure 3 only in that the housing seats 560 of the bearings of the adapter devices 530 and 535 are made totally outside the bottom bracket box 3, with reference to the axis X. In other words, the axial position of the housing seat 560 is totally distinct from the axial position of the first axial portion 45.

Moreover, in order to better support the canti-levered load that derives from the arrangement of the bearings totally outside the bottom bracket box 3, the abutment surface 555 has an outer diameter sufficient to cooperate in abutment with at least half of the front annular surface 556 of the bottom bracket box 3.

Figure 10 shows the essential components of an alternative embodiment of the bottom bracket assembly of the invention, which is indicated with 604 and which differs from that of figure 6 only in that the housing seat of the bearing 660 of each of the adapter devices 630 and 635 is formed so as to support the relative bearing 20 and 25 totally inside the bottom bracket box 603. Moreover, the annular throat 70 and the split pin are absent, even if an embodiment is provided in which they are instead provided.

In the embodiments described up to here, the bearings 20 and 25 are supported radially inside the respective adapter devices. In the following figures 11 and 12 the bearings are, on the contrary, supported radially outside the respective adapter devices.

In particular, figure 11 shows the essential components of an alternative embodiment of the bottom bracket assembly of the invention, which is indicated with 704 and which differs from that of figure 9 only in that the bearings 20 and 25 are coupled with the respective adapter device 730 and 735 at a radially inner surface 706 of the bearings. In other words, the housing seat 760 is arranged radially outside the respective adapter devices 730 and 735.

In the specific embodiment illustrated, the bearings 20, 25 are supported axially in a front position with respect to the bottom bracket box 3. A further possibility (not illustrated) of coupling of the bearings is that described in patent application No. EP 1792819 to the same Applicant, in which the radially most outer surface 707 of the bearings is coupled with an inner surface of the crank arm.

The advantage of supporting the bearings radially outside the respective adapter devices 730, 735 is that a greater space is available for the shaft, which can therefore be over-sized, and therefore more rigid and thinner.

Figure 12 shows the essential components of an alternative embodiment of the bottom bracket assembly of the invention, which is indicated with 804 and which differs from that of figure 11 only in that the adapter devices 830 and 835 are fitted outside the bottom bracket box 3 and the O-ring 65 is housed in an annular throat formed on the radially inner surface of the adapter device so as to project radially inwards with respect to such a radially inner surface. In particular, the second axial portion 50 and the first axial portion 45, which keep the axial dimensions described above, interact with the outer surface 808 of the bottom bracket box 3.

Also in this case, the bearings 20 and 25 are supported radially outside the respective adapter devices 830 and 835, but - differently from figure 11 - are arranged radially outside the bottom bracket box 3. An embodiment is provided in which the bearings are arranged axially outside the box 3, and in particular in a front position with respect to the bottom bracket box, as in figure 11.

Figure 13 shows an alternative embodiment of the adapter device of the invention, which is indicated with 930 and which differs from the adapter device 30 of figure 4 in that the elastically yieldable portion (obtained in the adapter device 30 of figure 4 through the use of the O-ring) is obtained by forming, in the main body 929 of the adapter device 930, a hollow end portion 965 that is suitably notched.

In particular, the free end portion 965 of the coupling surface 940 is made elastic thanks to a series of notches 928 preferably substantially parallel to the axis X. On the free end edge of the elastic portion 965 a flange 964 having annular extension (the continuity of which is interrupted by the aforementioned series of notches 928) is preferably formed. Such a flange 695 is adapted to snap-clasp into a corresponding annular throat formed inside the bottom bracket box 3 (not illustrated). In the case illustrated, the adapter device 930 is configured to house the respective bearing inside of it (the housing seat of the bearing cannot be seen), however alternative embodiments in which the bearing is housed radially outside the adapter device are not excluded.

Figure 14 shows the essential components of an alternative embodiment of the bottom bracket assembly of the invention, which is indicated with 1004 and which differs from that of figure 6 only in that the O-ring is replaced by an elastic element 1065 having quadrangular section. The elastic element 1065 can be glued to the main body 1029 of the adapter devices 1030 and 1035, but when the latter is made from composite material it is preferable to co-mould the elastic element 1065 with the main body 1029. The elastic element 1065 must, however, have a radially outer surface 1066 capable of interacting with the bottom bracket box 1003 to retain the adapter device 1030, 1035.

With regard to the material from which the main bodies of the adapter devices described above are made, it is preferable to use a metallic material, like a light alloy, for example of aluminium or titanium. Alternatively, it is also possible to use a structural or reinforced composite material, or else a simple polymer.

By composite material it is meant a material consisting of at least two components including a polymeric matrix and a filler comprising for example structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, the possibility of using a thermoplastic material is not excluded.

By structural composite materials those materials that contain structural fibres with a length of more than five millimetres are meant.

By reinforced composite materials, on the other hand, those materials comprising a polymeric matrix filled with fibres of a length shorter than or equal to five millimetres and/or with powders and/or with granules are meant. It should be observed that the aforementioned dimensions refer to the length of the fibre that can be found in a finished piece.

The reinforced composite materials have a lower structural strength than the structural composite materials, but are generally suitable for the injection moulding and can be easily worked, which is why they are particularly preferred for manufacturing the main bodies of the aforementioned adapter devices, to which they also give a considerable lightness.

Although up to now bottom bracket assemblies have always been described and illustrated in which both of the adapter devices are coupled by interference with the bottom bracket box, it is not excluded the possibility that just one of them be coupled in this way, so that the advantages deriving from it are still present, although to a more limited extent.

It should be observed that, in the present patent application, where a possibility of variation of a measurement has been indicated, like for example through the term "substantially" or similar, and also where a single measurement has been indicated without mentioning any possibility of variation, it should in any case be understood that there is a possibility of variation of the measurement itself at least equal to +/- 5%.

Moreover, where reference has been made to individual structural elements, the possibility that these elements be actually replaced by two or more elements capable of performing the same function is not excluded.

Finally, the embodiments described above can be combined with one another creating new embodiments.

Of course, a man skilled in the art can bring numerous modifications and variants to the adapter device described above, in order to satisfy specific and contingent requirements, all of which are anyway covered by the scope of protection of the present invention as defined by the following claims.

In particular, it is desired to point out that, in the aforementioned embodiments and in those which the man skilled in the art will be able to provide starting from those described above, the first axial portion 45 can be omitted, so that all the coupling portion 40 of the adapter device of the present invention is adapted to be coupled without interference with the bottom bracket box.

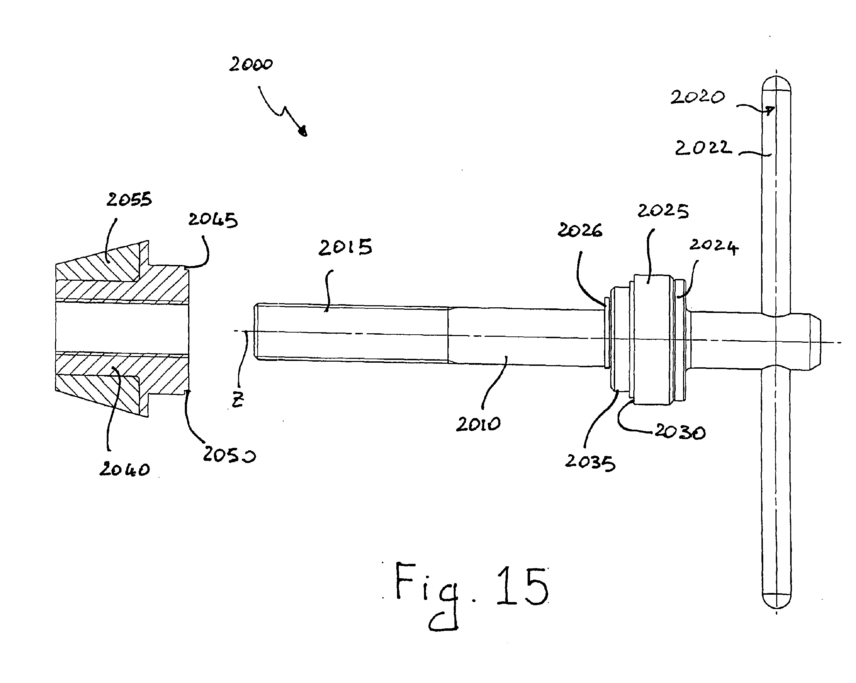

With reference to figure 15, a tool for coupling one or two of the aforementioned adapter devices is illustrated. Such a tool is globally indicated with 2000.

The tool 2000 comprises a shaft 2010 extending along a longitudinal axis Z and provided, at an end portion thereof, with a threading 2015. At an opposite end of the shaft 2010, it comprises a drive lever 2020, suitable for making the shaft 2015 rotate about the axis Z. The drive lever 2020 comprises a rod 2022 that is arranged transversally to the shaft 2010 and is suitable for manually applying a rotation torque to the shaft 2015.

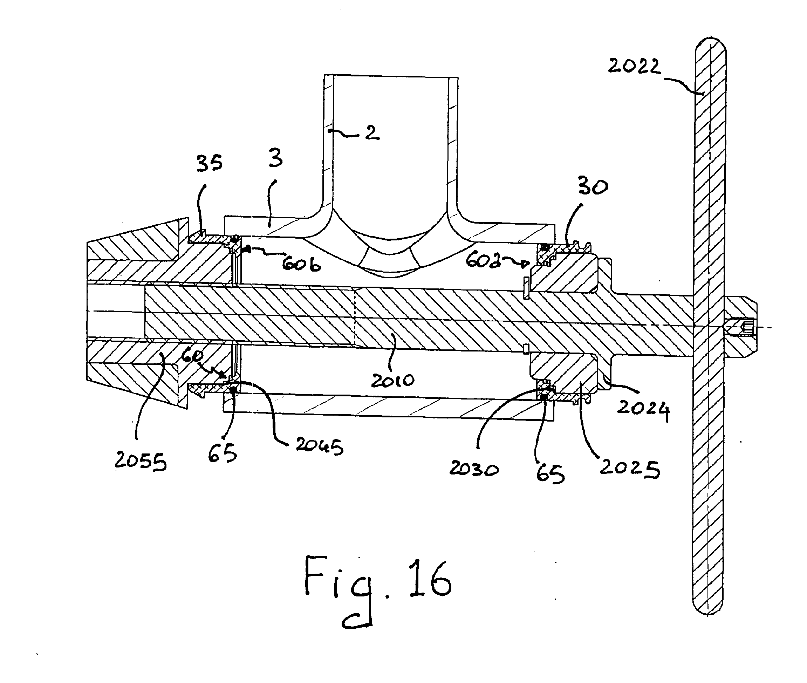

Fitted onto the shaft 2010 between the drive lever 2020 and the threading 2015 there is a thrusting element 2025, made in one piece with the shaft or, like in the represented case (figure 16), in abutment against a flange 2024 of the shaft 2010 and retained through a ring 2026 of the Seeger type, so as to make it integral with the shaft 2024 in the axial direction.

The thrusting element 2025 comprises at least one annular thrusting surface 2030, extending radially with respect to the axis Z of the shaft 2010 and substantially perpendicular to the axis Z, and at least one cylindrical centring surface 2035, extending coaxially to the axis Z. In use, the annular thrusting surface 2030 is deputed to axially thrust one of the adapter devices to be inserted into the bottom bracket box, whereas the cylindrical centring surface 2035 is deputed to the centring of the aforementioned adapter device.

A counter-thrusting element 2040 is adapted to be mounted on the threading 2015 of the shaft 2010. Such an element comprises a threaded through hole 2042 for the screwing on the threading 2015 of the shaft 2010. The counter-thrusting element 2040 also comprises, at an end thereof, at least one annular thrusting surface 2045 extending radially with respect to the axis Z of the shaft 2010 and substantially perpendicular to the axis Z and at least one cylindrical centring surface 2050 extending coaxially to the axis Z. At the opposite end the counter-thrusting element 2040 preferably, but not necessarily, comprises a conical portion 2055, for example consisting of an insert made from polymeric material.

In use, the tool 2000 can be used to couple one adapter device at a time, or two adapter devices simultaneously, in the bottom bracket box.

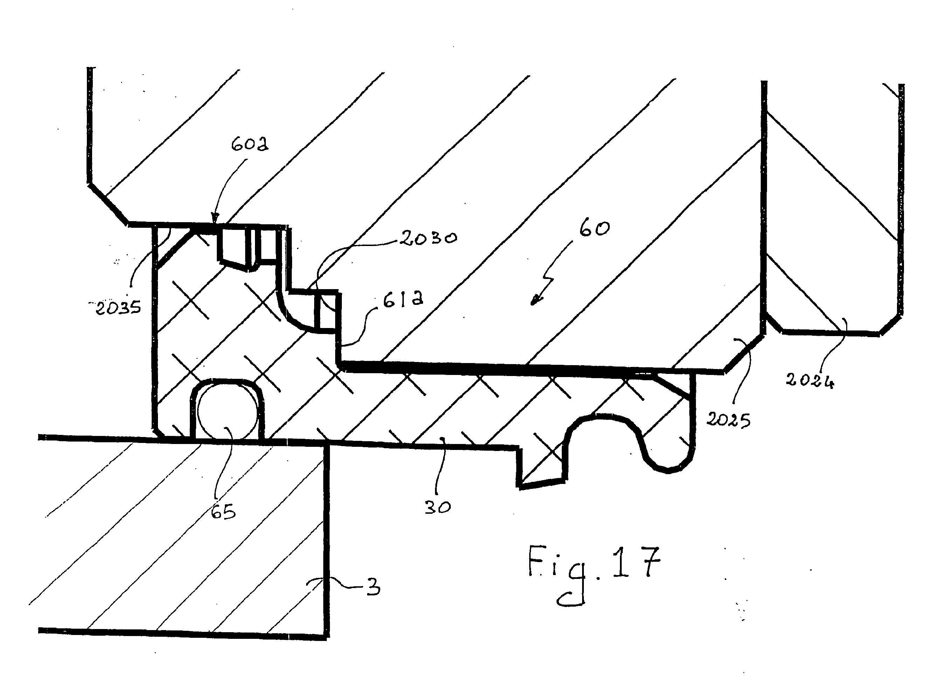

Figure 16 shows an initial step of simultaneous coupling of two aforementioned adapter devices 30 and 35 in the bottom bracket box 3. Firstly, the adapter devices 30 and 35 are inserted partially into the bottom bracket box 3 so as to be retained by the respective O-rings 65. Then the shaft 2010 is inserted into the bottom bracket box through one of the two adapter devices 30, 35 until the annular surface 2030 of the first thrusting element 2025 goes into abutment against a corresponding annular surface 61a of the housing seat of the bearing 60 - as better shown in figure 17. In such a position, the cylindrical centring surface 2035 is inserted into a corresponding cylindrical guide cavity 60a of the adapter device 30 and part of the threaded end portion of the shaft 2010 projects axially from the opposite side through the other adapter device 35.

At this point the counter-thrusting device 2040 is screwed on the threading 2015, with the annular surface 2045 directed towards the annular surface 2030. The screwing proceeds until the annular surface 2045 goes into abutment against a corresponding annular surface (analogous to the surface 60b of the adapter device 30) of the seat of the bearing 60 of the adapter device 35. In this position, the cylindrical centring surface 2050 is inserted into a corresponding cylindrical guide cavity 60b of the adapter device 35.

By applying a torque through the rod 2022, the shaft 2010 is inserted increasingly deeply into the counter-thrusting element 2040, which is therefore thrust towards the thrusting element 2025, thus forcing the adapter devices 30 and 35 to penetrate into the bottom bracket box 3.

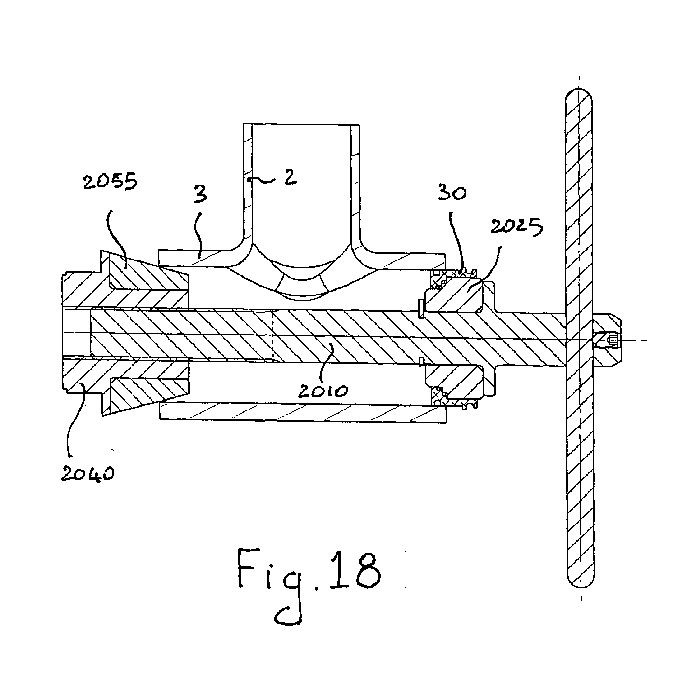

Figure 18 shows an initial insertion step of a single adapter device at a time. In this case, the counter-thrusting element 2040 is inserted into the bottom bracket box 3 with inverted orientation; its inner threading is therefore opposite to that of the counter-thrusting element 2040 of figures 15-17, so as to always be concordant with the threading 2015 of the shaft 2010. In this case, the cone 2055 achieves a centring directly with respect to the bottom bracket box 3.

## Claims

1. Adapter device for coupling a bearing of a bottom bracket assembly with a bottom bracket box of a bicycle, the adapter device extending along a longitudinal axis and comprising a housing seat of the bearing and a coupling portion with said box extending coaxially to said longitudinal axis, **characterised in that** said coupling portion is at least partially elastically yieldable.

2. Adapter device according to claim 1, wherein said coupling portion is adapted to be inserted into the bottom bracket box and it is at least elastically yieldable towards the inside of said adapter device.

3. Adapter device according to claim 1, wherein said coupling portion is adapted to be fitted onto the bottom bracket box and it is at least elastically yieldable towards the outside of said adapter device.

4. Adapter device according to any one of the previous claims, comprising an elastically yieldable element fitted onto, or inserted into, a portion of said adapter device, said portion being adapted to be inserted into, or fitted onto, said bottom bracket box.

5. Adapter device according to claim 4, wherein said elastically yieldable element is an O-ring.

6. Adapter device according to claim 4 or 5, wherein said coupling portion comprises a housing throat of said elastically yieldable element.

7. Adapter device according to any one of claims 4 to 6, wherein said elastically yieldable element is integral with said portion of said adapter device adapted to be inserted into, or fitted onto, said bottom bracket box.

8. Adapter device according to any one of claims 1 to 3, wherein said at least partially elastically yieldable coupling portion comprises a hollow cylindrical portion provided with a plurality of notches.

9. Adapter device according to any one of the previous claims, comprising at least one surface of axial abutment having different radial dimensions with respect to the radial dimensions of said coupling portion.

10. Adapter device according to claim 9, wherein said at least one surface of axial abutment has a substantially circumferential extension.

11. Adapter device according to claim 9 or 10, wherein said at least one surface of axial abutment is defined on an end flange of said adapter device.

12. Adapter device according to any one of claims 9 to 11, wherein said at least one surface of axial abutment is defined on said coupling portion.

13. Adapter device according to any one of the previous claims, wherein said coupling portion comprises a first axial portion, adapted to be coupled with interference with said bottom bracket box and distinct from a second axial portion which is elastically yieldable.

14. Adapter device according to claim 13, wherein said first axial portion is in a position which is axially more internal with respect to said second axial portion with reference to the coupling direction of the adapter device with said bottom bracket box.

15. Support group of a bottom bracket assembly in a bottom bracket box of a bicycle, comprising an adapter device according to any one of the previous claims and at least one bearing coupled with said adapter device.

16. Support group according to claim 15, wherein said at least one bearing is coupled with said adapter device through a coupling with interference, a transition coupling or a coupling with clearance.

17. Bottom bracket assembly for a bicycle, comprising at least one support group according to claim 15 or 16.

18. Assembly according to claim 17, comprising a shaft supported in rotation by said at least one bearing, said at least one bearing being coupled with interference with the shaft and being coupled through a transition coupling or through a coupling with clearance with the respective adapter device.

19. Assembly according to claim 17, comprising a shaft supported in rotation by said at least one bearing, said at least one bearing being coupled with interference with the respective adapter device and being coupled through a transition coupling or a coupling with clearance with the shaft.

20. Bicycle comprising a bottom bracket box and at least one adapter device according to any one of claims 1 to 14.
